# FASCICULE DE BREVET EUROPEEN

(11) **EP 3 212 679 B1**
(45) Date de publication et mention de la délivrance du brevet: **28.11.2018**
(21) Numéro de dépôt: 15793861.4
(22) Date de dépôt: 12.10.2015
(51) Int. Cl.: C08F 120/06, C08F 2/38

(54) **PROCEDE DE POLYMERISATION DE L'ACIDE (METH)ACRYLIQUE EN SOLUTION**
VERFAHREN ZUR POLYMERISATION VON (METH)ACRYLSÄURE IN LÖSUNG
METHOD FOR THE POLYMERISATION OF (METH)ACRYLIC ACID IN SOLUTION

(30) Priorité: 29.10.2014 FR 1460366
(43) Date de publication de la demande: 06.09.2017
(73) Titulaire: COATEX, 69730 Genay (FR)
(72) Inventeur: SUAU, Jean-Marc, F-69480 Lucenay (FR); CHAMPAGNE, Clémentine, F-69300 Caluire-et-cuire (FR)
(74) Mandataire: Balmefrezol, Ludovic Francis Pierre
(86) Numéro de dépôt international: PCT/FR2015/052733
(87) Numéro de publication internationale: WO 2016/066916

(56) Documents cités:
- US-A1- 2007 179 262
- US-A1- 2014 088 250

## Description

La présente invention concerne le domaine technique de la polymérisation radicalaire de l'acide (méth)acrylique. Plus précisément, la présente invention concerne un nouveau procédé de polymérisation radicalaire, les polymères ainsi obtenus et leurs applications dans l'industrie.

### Contexte de l'invention

Il existe différents procédés de polymérisation radicalaire.

Tout d'abord, on peut citer les méthodes qui mettent en oeuvre des solvants organiques tels que des alcools secondaires comme l'isopropanol. Aujourd'hui, ces méthodes ne sont pas satisfaisantes car elles génèrent des composés organiques volatils (COV ou en anglais VOC).

Il existe d'autres méthodes de synthèse de polymères polyacryliques qui ont lieu dans l'eau et qui ne génèrent pas de composé organique volatil.

Un de ces procédés nécessite l'utilisation de peroxyde d'hydrogène qui joue le rôle d'initiateur, ainsi que, par exemple, de sulfate de cuivre qui joue le rôle de catalyseur et d'agent de transfert de chaîne. Néanmoins, pour aboutir à un polymère qui présente une masse moléculaire inférieure à 6 000 g/mol, il est nécessaire d'engager des quantités importantes de catalyseur(s), ce qui génère des quantités importantes de sous-produits polluants, souvent néfastes à l'utilisation dudit polymère.

Alternativement, on utilise l'acide thiolactique ou un autre mercaptan RSH en tant qu'agent de transfert de chaîne supplémentaire, mais, à nouveau, pour obtenir un polymère qui présente une masse moléculaire inférieure à 6 000 g/mol, il faut engager des quantités importantes d'acide(s) thiolactique(s) ou, de manière plus générale, d'agent(s) de transfert.

D'autres procédés encore ont recours à l'hypophosphite de sodium (NaPO₂H₂) en tant qu'agent de transfert de chaîne et d'oxydo-réduction, en présence de peroxyde d'hydrogène ou de générateur de radicaux. Cela présente l'inconvénient majeur de nécessiter des quantités importantes d'hypophosphite de sodium, une fraction du phosphore se retrouvant greffée dans le polymère, une autre fraction du phosphore se retrouvant sous forme de sels de phosphate dans les eaux de procédé. Ceci constitue, d'une part, un inconvénient lors de l'utilisation du polymère et, d'autre part, un polluant pour l'environnement.

Parmi les différents procédés de polymérisation radicalaire, on peut également citer la polymérisation radicalaire contrôlée de type RAFT (Reversible Addition Fragmentation chain Transfer) qui permet de réaliser la polymérisation vivante d'un monomère. Un tel procédé permet, en outre, d'obtenir des polymères présentant de faibles indices de polydispersibilité IP (également appelés indices de polymolécularité), ce qui les rend particulièrement efficaces pour certaines applications.

Pour mettre en oeuvre une polymérisation radicalaire contrôlée de type RAFT, et ainsi obtenir un polymère de masse moléculaire attendue présentant un bon indice IP, il est important d'introduire dans le milieu réactionnel une quantité disponible d'agent(s) de transfert de chaîne, autrement dit d'engager une quantité d'agent(s) de transfert de chaîne telle que chaque chaîne à polymériser soit fonctionnalisée par un agent de transfert de chaîne. En outre, il est important que cet agent de transfert de chaîne soit d'ores et déjà disponible lorsque la polymérisation est initiée, c'est-à-dire lorsque l'on chauffe le réacteur de polymérisation et que l'on génère des radicaux. Ceci implique que des quantités importantes d'agent(s) de transfert de chaîne doivent être mises en oeuvre dans un procédé de polymérisation radicalaire contrôlée de type RAFT. Cela est d'autant plus vrai que les masses moléculaires visées doivent être faibles, par exemple inférieures à 10 000 g/mol.

Malgré tous les avantages résultant d'une polymérisation RAFT, l'utilisation de telles quantités d'agent(s) de transfert de chaîne présentent un certain nombre d'inconvénients. Tout d'abord, il s'avère que les agents de transfert de chaîne sont des produits coûteux, ce qui a une incidence non négligeable sur le coût du polymère obtenu.

De plus, lorsqu'on utilise des agents de transfert de chaîne soufrés tels que décrits dans les documents WO 02/070571, WO 2005/095466 et WO 2006/024706, on constate que le polymère qui est issu d'un tel procédé de polymérisation radicalaire contrôlée de type RAFT porte sur son squelette l'agent de transfert de chaîne ou des résidus de celui-ci. Ceci peut notamment être mis en évidence par des analyses RMN (Llauro *et al.,* 2004). Il est donc nécessaire d'hydrolyser, par exemple avec de la soude NaOH, le produit issu du procédé, ce qui constitue une étape supplémentaire dans le procédé. En outre, on constate qu'une fraction de ces composés va être dégradée en sous-produits soufrés libres de type CS₂ et H₂S et se retrouver dans la solution aqueuse de polymère finale et dans les eaux d'écoulement du procédé, pouvant ainsi avoir un impact négatif sur l'être humain et sur l'environnement. En outre, la présence de ces sous-produits soufrés dans la solution aqueuse génère lors de l'utilisation du polymère des dégagements gazeux nocifs pour l'être humain. Ceci est particulièrement vrai quand le polymère est utilisé comme agent dispersant ou d'aide au broyage de matières minérales, par exemple lors du broyage du carbonate de calcium CaCO₃.

### Brève description de l'invention

Un objet de la présente invention est de proposer un procédé qui permette d'obtenir une solution aqueuse de polymères qui contienne moins de sous-produits de type sulfure de carbone ou sulfure d'hydrogène, de manière à réduire les risques sur l'être humain et sur l'environnement lors de la synthèse du polymère, mais également lors de l'utilisation de la solution polymérique.

Un autre objet de la présente invention est de proposer un procédé de préparation d'un polymère de l'acide (méth)acrylique présentant une masse moléculaire inférieure à 6 500 g/mol, par exemple inférieure à 6 000 g/mol, telle que mesurée par CES.

Un autre objet de la présente invention est de proposer un procédé de préparation d'un polymère polyacrylique sans solvant, c'est-à-dire qui ne génère pas de composé organique volatil.

Un autre objet encore de la présente invention est de proposer un procédé de fabrication d'un polymère présentant un bon indice IP tout en maîtrisant les coûts associés au procédé.

Un autre objet de la présente invention est de proposer un procédé de fabrication d'un polymère qui ne comporte pas sur son squelette d'atome de phosphore et un minimum d'atomes de soufre issus des réactifs de polymérisation et qui soit malgré tout de bas poids moléculaire.

Un autre objet encore de la présente invention est de réduire la quantité de polluants dans les eaux du procédé, liés à l'utilisation de réactifs comportant du soufre et du phosphore.

### Description détaillée de l'invention

### Procédé de préparation du polymère de l'acide (méth)acrylique

La présente invention concerne un procédé de préparation d'un polymère de l'acide (méth)acrylique en solution aqueuse, ledit polymère présentant une masse moléculaire inférieure à 6 500 g/mol, telle que mesurée par Chromatographie d'Exclusion Stérique (CES), comprenant les étapes suivantes :
a) on introduit dans le réacteur de synthèse de l'eau, ainsi que :
   a1) un composé de type carbonate de cuivre ou un de ses dérivés,
   a2) éventuellement un sel de fer, par exemple du sulfate de fer et/ou éventuellement du carbonate de fer, et
   a3) éventuellement un monomère anionique comprenant une fonction insaturée polymérisable et un groupement carboxylique, par exemple de l'acide (méth)acrylique et/ou de l'acide maléique,
b) on chauffe le réacteur à une température d'au moins 60°C et
c) on introduit dans le réacteur les composés suivants :
   c1) le ou les monomère(s) (méth)acrylique(s) à polymériser,
   c2) un système initiateur de polymérisation et
   c3) un composé de formule (I) : 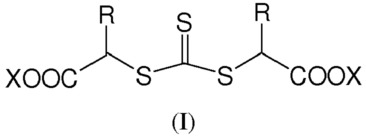 selon laquelle :
      - X représente Na, K ou H et
      - R représente une chaîne alkyle comportant de 1 à 5 atomes de carbone.

Le procédé de la présente invention permet, en effet, d'obtenir des polymères qui présentent une masse moléculaire inférieure à 6 500 g/mol, par exemple inférieure à 6 000 g/mol, par exemple de l'ordre de 5 000 g/mol ou de 4 000 g/mol, telle que mesurée par CES.

Selon un mode de réalisation de la présente invention, les polymères présentent une masse moléculaire supérieure à 500 g/mol, par exemple supérieure à 1 000 g/mol, telle que mesurée par CES.

La masse moléculaire Mw (ou de manière équivalente, dans le cadre de la présente invention, le poids moléculaire) des polymères de la présente invention peut être déterminée par Chromatographie d'Exclusion Stérique (CES). On utilise alors des étalons commerciaux de polymères d'acrylate de sodium en poudre dont les différentes masses moléculaires sont certifiées par le fournisseur.

La présente invention repose sur l'utilisation conjointe, au cours de la préparation d'un polymère de l'acide (méth)acrylique en solution aqueuse, de deux composés, plus précisément :
- d'un composé de type carbonate de cuivre CuCO₃ ou un de ses dérivés et
- d'un composé de formule (I) : 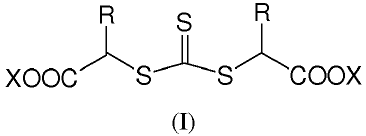 selon laquelle :
   - X représente Na, K ou H et
   - R représente une chaîne alkyle comportant de 1 à 5 atomes de carbone.

En effet, l'utilisation simultanée de ces deux composés permet de préparer des polymères de l'acide (méth)acrylique en ayant recours, d'une part, à une quantité limitée d'agent(s) de transfert de chaîne soufré(s), par rapport à la polymérisation radicalaire contrôlée de type RAFT telle que décrite dans les documents WO 02/070571, WO 2005/095466 et WO 2006/024706 et, d'autre part, de limiter la quantité de sels métalliques hydrosolubles (notamment sulfate de cuivre) mise en oeuvre.

Par « composé de type carbonate de cuivre ou un de ses dérivés », on entend le composé CuCO₃ ou tous autres dérivés, par exemple le CuCO₃.Cu(OH)₂. On cite également, par exemple, la malachite (Cu₂(OH)₂CO₃) et l'azurite/chessylite (Cu₃(OH)₂(CO₃)₂). En d'autres termes, un composé de type carbonate de cuivre est un composé qui comporte au moins un atome de cuivre et qui se solubilise et se dégrade une fois dans l'eau sous conditions acides. Ainsi, un tel composé ne peut pas être considéré comme un catalyseur qui, par définition, revient à sa forme initiale après réaction.

La présente invention se distingue notamment du procédé décrit dans la demande de brevet WO 2014/049252 en ce qu'elle utilise un tel composé qui permet de limiter encore plus la quantité de sels dans les eaux du procédé.

Tous les aspects de la présente invention décrits ci-après peuvent être considérés seuls ou en combinaison.

Le polymère de la présente invention est obtenu par polymérisation d'unités monomériques. Dans le cadre de la présente invention, ces unités monomériques sont essentiellement des monomères d'acide (méth)acrylique. Ces monomères sont ajoutés au réacteur de synthèse après que celui-ci ait été préalablement chargé avec le composé de type carbonate de cuivre ou un de ses dérivés, puis chauffé à une température d'au moins 60°C.

On peut également, selon un aspect de la présente invention, ajouter dans le réacteur de synthèse, avant de le chauffer, des monomères anioniques comprenant une fonction insaturée polymérisable et un groupement carboxylique, par exemple de l'acide (méth)acrylique et/ou de l'acide maléique.

Cet ajout optionnel permet de préparer des monomères spéciaux tels qu'explicités plus loin.

Selon l'étape a) du procédé, on peut ajouter dans le réacteur de synthèse un sel de fer. Par « sel de fer », on entend, par exemple, le composé FeSO₄ ou tous autres dérivés hydratés, par exemple le FeSO₄.7H₂O.

Selon l'étape a) du procédé, on peut également ajouter dans le réacteur de synthèse du carbonate de fer FeCO₃ ou tous autres dérivés.

Selon l'étape a) du procédé, on peut également ajouter dans le réacteur de synthèse un monomère anionique comprenant une fonction insaturée polymérisable et un groupement carboxylique.

Selon un mode de réalisation, ledit monomère anionique a3) est choisi dans le groupe consistant en l'acide acrylique, l'acide méthacrylique, l'acide maléique, l'acide itaconique, l'acide crotonique et un mélange de ces monomères.

Selon un autre mode de réalisation, on ajoute au réacteur un mélange de deux ou plusieurs monomères a3) différents. Par exemple, il peut s'agir d'un mélange de monomères d'acide acrylique et de monomères d'acide méthacrylique, d'un mélange de monomères d'acide maléique, d'acide acrylique et d'acide méthacrylique.

Selon un autre mode de réalisation encore, ledit monomère anionique a3) est choisi dans le groupe consistant en l'acide acrylique, l'acide méthacrylique, l'acide maléique et un mélange de ces monomères.

Lorsque l'on ajoute de tels monomères a3) dans le réacteur de synthèse à l'étape a), on prépare une certaine quantité d'un « monomère spécial », à savoir par exemple l'acrylate de cuivre, le méthacrylate de cuivre et/ou le maléate de cuivre. Il peut s'agir d'un mélange de monomères spéciaux, par exemple sous forme acrylate ou diacrylate, méthacrylate ou diméthacrylate, maléate ou dimaléate, compte tenu de l'ionicité du cuivre en solution aqueuse. Le monomère acide (acide acrylique, acide méthacrylique et/ou acide maléique) peut se trouver en excès par rapport au composé comportant des atomes de cuivre, de manière à ce que l'ensemble des ions Cu²⁺ de ce composé se trouve sous forme solvatée.

Selon un autre mode de réalisation, lorsque l'on ajoute de tels monomères a3) dans le réacteur de synthèse à l'étape a), et que l'on ajoute également un sel de fer, par exemple du sulfate de fer et/ou du carbonate de fer, on prépare une certaine quantité d'un « monomère spécial », à savoir par exemple l'acrylate de cuivre/fer, le méthacrylate de cuivre/fer et/ou le maléate de cuivre/fer. Il peut s'agir d'un mélange de monomères spéciaux, par exemple sous forme acrylate ou diacrylate, méthacrylate ou diméthacrylate, maléate ou dimaléate, compte tenu de l'ionicité du cuivre et du fer en solution aqueuse. Le monomère acide (acide acrylique, acide méthacrylique et/ou acide maléique) peut se trouver en excès par rapport au composé comportant des atomes de cuivre, de manière à ce que l'ensemble des ions Cu²⁺ et Fe²⁺ de ce composé se trouve sous forme solvatée. Selon la présente invention, le polymère d'acide (méth)acrylique en solution obtenu par polymérisation, selon le procédé décrit ci-dessus, présente une masse moléculaire inférieure à 6 500 g/mol. Selon un mode de réalisation, il présente, en outre, un indice de polydispersité IP inférieur à 3, par exemple compris entre 2 et 3.

Les polymères sont généralement caractérisés par deux indices/grandeurs/valeurs :
- l'indice de polymolécularité IP (également appelé de manière équivalente polydispersité PD) et
- la masse moléculaire Mw (également appelée de manière équivalente masse molaire ou poids moléculaire), exprimée en g/mol.

L'indice de polymolécularité correspond à la distribution des masses molaires des différentes macromolécules au sein du polymère d'acide (méth)acrylique. Si toutes les macromolécules présentent une même longueur (donc une même masse moléculaire), cet indice est proche de 1. Si par contre, les macromolécules présentent des longueurs différentes (donc des masses moléculaires différentes), l'indice IP est supérieur à 1. Plus l'indice IP du polymère est proche de 1, plus celui-ci est efficace dans ses diverses applications.

Néanmoins, il peut s'avérer très coûteux d'obtenir un polymère d'acide (méth)acrylique présentant un indice IP proche de 1. Le procédé de la présente invention permet d'obtenir un polymère d'acide (méth)acrylique présentant un bon indice IP tout en maîtrisant les coûts associés au procédé.

Selon un mode de réalisation, l'indice IP du polymère de l'acide (méth)acrylique en solution aqueuse obtenu selon le procédé de la présente invention est inférieur à 3.

Selon un mode de réalisation, l'indice IP du polymère de l'acide (méth)acrylique en solution aqueuse obtenu selon le procédé de la présente invention est inférieur à 2,7, tel que calculé selon IP = Mw/Mn, Mw et Mn étant mesurées par CES.

Selon l'étape b) du procédé objet de la présente invention, le réacteur de synthèse est chauffé à une température minimale de 60°C avant l'introduction des monomères à polymériser.

Selon un aspect de la présente invention, on chauffe le réacteur à une température d'au moins 80°C, par exemple à 95°C.

Une température d'au moins 60°C, par exemple de 85°C ou de 90°C, est maintenue tout au long de l'étape c) de polymérisation.

L'étape c) de polymérisation comprend l'ajout selon c1) d'au moins un monomère (méth)acrylique.

Par «le ou les monomère(s) (méth)acrylique(s) à polymériser », on entend que le procédé de l'invention vise à fabriquer soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique). Dans ce dernier cas, selon un aspect de l'invention, le ratio molaire entre acide acrylique et acide méthacrylique peut varier entre 1:100 et 100:1, par exemple entre 1:1 et 100:1, ou entre 1:1 et 50:1. Par ailleurs, le monomère (méth)acrylique à polymériser se trouve sous forme acide ou éventuellement partiellement neutralisé, par exemple avec NaOH.

Selon un mode de réalisation de la présente invention, le pourcentage massique (poids/poids) entre le monomère a3) et le(s) monomère(s) méthacrylique(s) à polymériser c1) est inférieur à 10 %.

L'étape de polymérisation c) nécessite également l'utilisation d'un système initiateur de polymérisation c2).

Par «système initiateur de polymérisation» ou «système amorceur de polymérisation », on entend un système capable d'initier la polymérisation des monomères. Il s'agit classiquement d'un composé chimique ayant la capacité de générer des radicaux libres. Selon un aspect de la présente invention, le système initiateur de polymérisation est choisi dans le groupe consistant en le peroxyde d'hydrogène (H₂O₂), les persulfates de sodium, les persulfates de potassium, les persulfates d'ammonium, les hydroperoxydes et un mélange d'au moins deux de ces composés.

Selon un autre aspect de la présente invention, le système initiateur de polymérisation utilisé à l'étape c2) est le peroxyde d'hydrogène, également appelé eau oxygénée, H₂O₂. L'utilisation de ce système initiateur est préférée car cela permet de limiter la présence de sels de sulfate.

L'étape c) du procédé de la présente invention met également en oeuvre au moins un composé de formule (I) : 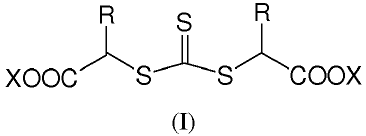 selon laquelle :
- X représente Na, K ou H et
- R représente une chaîne alkyle comportant de 1 à 5 atomes de carbone.

Par « chaîne alkyle comportant de 1 à 5 atomes de carbone », on entend une chaîne méthyle, éthyle, propyle, isopropyle, butyle, tert-butyle, isobutyle ou pentyle.

Selon un aspect de la présente invention, ledit au moins un composé de formule (I) est le dipropyl trithiocarbonate (DPTTC, CAS No. 6332-91-8) ou ses sels, par exemple son sel disodique (trithiocarbonate de dipropionate de sodium, CAS No. 86470-33-2, Mw = 298,31 g/mol), tel que représenté par la formule (II) ci-dessous :

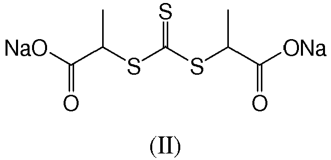

Selon un mode de réalisation de la présente invention, le pourcentage molaire (mol/mol) entre ledit composé de formule (I) et ledit(lesdits) monomère(s) anionique(s) à polymériser est compris entre 0,001 % et 1 %, par exemple entre 0,01 % et 0,8 % ou entre 0,02 % et 0,5 %.

Par « ledit(lesdits) monomère(s) anionique(s) à polymériser », on entend l'ensemble des monomères anioniques à polymériser présents dans le réacteur de synthèse. Il s'agit principalement du ou des monomère(s) (méth)acrylique(s) selon c1). Il peut également s'agir des monomères anioniques selon a3).

Selon un mode de réalisation de la présente invention, le pourcentage massique (poids/poids) entre ledit agent de transfert de chaîne et ledit(lesdits) monomère(s) anionique(s) est compris entre 0,1% et 2,5 %, par exemple entre 0,15% et 2,1% ou entre 0,15% et 1,5 %.

Selon un mode de réalisation de la présente invention, ledit composé de formule (I) est le composé (II), c'est-à-dire le composé (I) dans lequel X représente Na et R représente CH₃ et le pourcentage massique (poids/poids) entre ledit composé de formule (I) et ledit(lesdits) monomère(s) anionique(s) est compris entre 0,1% et 1,75 %, par exemple entre 0,15 % et 1,5 % ou entre 0,15 % et 0,5 %.

L'introduction des constituants dans le réacteur de synthèse peut se faire «de manière continue », c'est-à-dire à vitesse constante ou variable, mais sans arrêt de l'introduction. Egalement, l'introduction des constituants dans le réacteur de synthèse peut se faire « de manière simultanée », c'est-à-dire que les différents constituants sont introduits concomitamment.

Selon un mode de réalisation du procédé de la présente invention, l'introduction des constituants dans le réacteur de synthèse se fait « de manière proportionnelle », c'est-à-dire que la proportion de chaque constituant du mélange introduite dans le réacteur de synthèse reste constante au cours du temps de réaction, vis-à-vis des autres constituants du mélange.

Selon un mode de réalisation de la présente invention, l'étape a) du procédé consiste à introduire dans un réacteur de synthèse :
- de l'eau,
- du carbonate de cuivre CuCO₃ ou un de ses dérivés et
- de l'acide (méth)acrylique et/ou de l'acide maléique.

Cette étape conduit à la préparation d'un (méth)acrylate de cuivre et/ou d'un maléate de cuivre dans le réacteur de synthèse.

Par « (méth)acrylate de cuivre », on entend un acrylate de cuivre et/ou un méthacrylate de cuivre.

Selon un mode de réalisation, l'acide (méth)acrylique et/ou l'acide maléique se trouve(nt) en excès molaire par rapport au composé carbonate de cuivre ou un de ses dérivés, de manière à ce que l'ensemble des atomes de cuivre soit sous forme ionisée dans le réacteur de synthèse.

Selon un autre aspect de l'invention, le pourcentage massique (poids/poids) entre le (méth)acrylate de cuivre et/ou le maléate de cuivre obtenu(s) à l'étape a) et ledit(lesdits) monomère(s) (méth)acrylique(s) à polymériser selon l'étape c) et éventuellement a3) est compris entre 0,5 % et 5 %, par exemple entre 1 % et 4 %, ou entre 1,5 % et 3 %.

Selon un autre mode de réalisation de la présente invention, l'étape a) du procédé consiste à introduire dans un réacteur de synthèse :
- de l'eau,
- du carbonate de cuivre CuCO₃ ou un de ses dérivés,
- du sulfate de fer FeSO₄ (ou un de ses dérivés hydratés) et/ou du carbonate de fer FeCO₃ et
- de l'acide (méth)acrylique et/ou de l'acide maléique.

Cette étape conduit à la préparation d'un (méth)acrylate de cuivre-fer et/ou d'un maléate de cuivre-fer dans le réacteur de synthèse.

Par « (méth)acrylate de cuivre-fer », on entend un acrylate de cuivre-fer et/ou un méthacrylate de cuivre-fer.

Selon un mode de réalisation, l'acide (méth)acrylique et/ou l'acide maléique se trouve(nt) en excès molaire par rapport au carbonate de cuivre ou un de ses dérivés, sulfate de fer et carbonate de fer, de manière à ce que l'ensemble des atomes de cuivre et de fer soit sous forme ionisée dans le réacteur de synthèse.

Selon un autre aspect de l'invention, le pourcentage massique (poids/poids) entre le sel de fer, par exemple le sulfate de fer ou un de ses dérivés hydratés, et ledit(lesdits) monomère(s) (méth)acrylique(s) à polymériser est compris entre 0,01 % et 3 %, par exemple entre 0,03 % et 1 %, ou entre 0,05 % et 0,5 %.

Selon un mode de réalisation de la présente invention, le pourcentage molaire (mol/mol) entre le composé de type carbonate de cuivre ou un de ses dérivés a1) et ledit(lesdits) monomère(s) anionique(s) à polymériser est compris entre 0,001 % et 3 %, par exemple entre 0,005 % et 1 % ou entre 0,01 % et 0,8 %.

Selon un autre mode de réalisation de la présente invention, le pourcentage molaire (mol/mol) entre le sel de fer et/ou le carbonate de fer a2) et ledit(lesdits) monomère(s) anionique(s) à polymériser est compris entre 0,001 % et 3 %, par exemple entre 0,005 % et 1 % ou entre 0,01 % et 0,5 %.

Selon un mode de réalisation de la présente invention plus particulièrement préféré, aucun sel de fer, par exemple sulfate de fer, n'est introduit dans le réacteur de synthèse au cours du procédé.

Selon un autre aspect de l'invention, le procédé ne comporte aucune étape d'élimination des sous-produits de réaction après l'étape c) de polymérisation.

Selon un autre aspect de la présente invention, le procédé comporte une étape additionnelle de neutralisation, partielle ou totale, du polymère.

Le pourcentage molaire de neutralisation des sites acides actifs du polymère par un agent de neutralisation peut, par exemple varier entre 10 % et 90 %, par exemple entre 15 % et 85 %.

La neutralisation du polymère obtenu peut également être simple (un seul agent de neutralisation) ou multiple (plusieurs agents de neutralisation).

On choisit l'agent neutralisant de manière à ce que le contre-ion présent dans la solution polymérique après neutralisation soit, par exemple, choisi dans le groupe consistant en l'ion calcium, l'ion sodium, l'ion potassium, l'ion lithium, l'ion magnésium, l'ion baryum, l'ion zinc, l'ion aluminium et une amine.

Par exemple, il est possible d'envisager les modes de neutralisation suivants, seuls ou en combinaison :
- un pourcentage molaire de neutralisation des sites acides actifs du polymère par un agent de neutralisation contenant l'ion calcium compris entre 15 % et 40 %, par exemple compris entre 20 % et 35 %,
- un pourcentage molaire de neutralisation des sites acides actifs du polymère par un ou plusieurs agent(s) de neutralisation monofonctionnel(s) contenant l'ion sodium compris entre 7 % et 70 %, par exemple compris entre 20 % et 60 % et
- un pourcentage molaire de neutralisation des sites acides actifs du polymère par un agent de neutralisation contenant l'ion magnésium, baryum, zinc, aluminium ou une amine ou leurs mélanges et en particulier par un agent de neutralisation contenant l'ion magnésium compris entre 0 % et 30 %, par exemple compris entre 5 % et 25 %.

### Combinaison de composés pour préparer un polymère d'acide (méth)acrylique en solution

La présente invention concerne également l'utilisation d'au moins un composé de type carbonate de cuivre ou un de ses dérivés et d'un composé de formule (I): 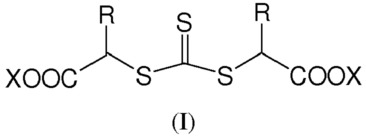 selon laquelle :
- X représente Na, K ou H et
- R représente une chaîne alkyle comportant de 1 à 5 atomes de carbone,
pour préparer un polymère de l'acide (méth)acrylique en solution, ledit polymère présentant une masse moléculaire inférieure à 6 500 g/mol, telle que mesurée par CES. La présente invention concerne également l'utilisation :
- d'au moins un composé de type carbonate de cuivre ou un de ses dérivés,
- d'un sel de fer, par exemple du sulfate de fer et/ou éventuellement du carbonate de fer, et
- d'un composé de formule (I): 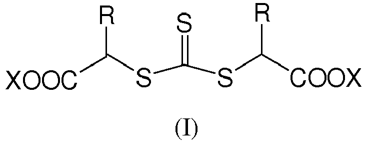 selon laquelle :
   - X représente Na, K ou H et
   - R représente une chaîne alkyle comportant de 1 à 5 atomes de carbone,
pour préparer un polymère de l'acide (méth)acrylique en solution, ledit polymère présentant une masse moléculaire inférieure à 6 500 g/mol, telle que mesurée par CES.

Selon un aspect de la présente invention, ledit au moins un composé de formule (I) est le dipropyl trithiocarbonate (DPTTC, CAS No. 6332-91-8) ou ses sels, par exemple son sel disodique (trithiocarbonate de dipropionate de sodium, CAS No. 86470-33-2), tel que représenté par la formule (II) ci-dessous : 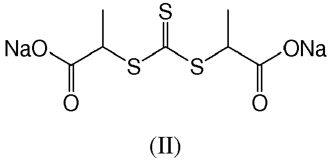 et est utilisé pour préparer ledit polymère de l'acide (méth)acrylique en solution, ledit polymère présentant une masse moléculaire inférieure à 6 500 g/mol, telle que mesurée par CES.

### EXEMPLES

Dans chacun des exemples suivants, la masse moléculaire des polymères selon l'invention (par exemple la masse moléculaire moyenne en masse Mw ou la masse moléculaire en nombre Mn) est déterminée par Chromatographie d'Exclusion Stérique (CES) ou en anglais «Gel Permeation Chromatography » (GPC).

Une telle technique met en oeuvre un appareil de chromatographie liquide de marque WATERS™ doté d'un détecteur. Ce dernier est un détecteur de concentration réfractométrique de marque WATERS™.

Cet appareillage de chromatographie liquide est doté d'une colonne d'exclusion stérique convenablement choisie par l'homme du métier afin de séparer les différents poids moléculaires des polymères étudiés.

La phase liquide d'élution est une phase aqueuse ajustée à pH 9,00 par de la soude 1N contenant 0,05M de NaHCO₃, 0,1M de NaNO₃, 0,02M de triétanolamine et 0,03 % de NaN₃.

De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis, on filtre à 0,2 µm. 100 µL sont ensuite injectés dans l'appareil de chromatographie (éluant : une phase aqueuse ajustée à pH 9,00 par de la soude 1N contenant 0,05 M de NaHCO₃, 0,1M de NaNO₃, 0,02 M de triétanolamine et 0,03 % de NaN₃).

L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur et une colonne linéaire de type ULTRAHYDROGEL WATERS™ de 30 cm de long et 7,8 mm de diamètre intérieur. Le système de détection, quant à lui, se compose d'un détecteur réfractométrique de type RI WATERS™ 410. Le four est porté à la température de 60°C et le réfractomètre est porté à la température de 45°C.

L'appareil de chromatographie est étalonné par des étalons de polyacrylate de sodium en poudre de différentes masses moléculaires certifiées par le fournisseur : POLYMER STANDARD SERVICE ou AMERICAN POLYMER STANDARDS CORPORATION. L'indice de polydispersité IP du polymère est le rapport de la masse moléculaire moyenne en masse Mw sur la masse moléculaire en nombre Mn, dont les valeurs sont déterminées comme précédemment décrit en Chromatographie d'Exclusion Stérique. Ainsi, l'indice IP est calculé selon IP = Mw/Mn, Mw et Mn étant mesurées par CES.

La quantité de monomères résiduels est mesurée selon des techniques classiques, connues de l'homme du métier, par exemple par Chromatographie Liquide à Haute Pression (CLHP) ou en anglais «High Performance Liquid Chromatography » (HPLC).

### Exemple 1 :

Cet exemple a pour objet d'illustrer la préparation de polymères d'acide (méth)acrylique selon l'invention, par l'utilisation :
- d'un sel de dipropionate trithiocarbonate (DPTTC),
- de carbonate de cuivre sous forme CuCO₃.Cu(OH)₂ et
- éventuellement de carbonate de fer sous forme FeCO₃.

### Essai 1 - Hors invention :

Selon cet essai hors invention, on n'introduit pas de carbonate de cuivre sous forme CuCO₃.Cu(OH)₂. On n'utilise pas non plus de sel de dipropionate trithiocarbonate (DPTTC). On met en oeuvre, à la place, des composés visés par la présente invention, un sel de fer sous forme FeSO₄.7H₂O.

On charge dans le réacteur de synthèse en verre muni d'une agitation mécanique et d'un chauffage de type bain d'huile 245 g d'eau, 0,28 g de sulfate de fer sous forme FeSO₄.7H₂O (1,0 x 10⁻³ mol), 0,15 g de carbonate de fer sous forme FeCO₃ (1,3 x 10⁻³ mol) et 10 g d'acide acrylique (0,139 mol).

On chauffe jusqu'à atteindre une température de 90°C.

On ajoute de manière simultanée et continue, en 2h de temps :
- 269,8 g d'acide acrylique (3,75 mol) et
- 35,3 g de H₂O₂ à 35 % dissous dans 9,4 g d'eau.

On cuit 1h30 à 90°C.

On neutralise avec de la soude 50 % jusqu'à obtenir un pH = 8.

### Essai 2 - Hors invention :

Selon cet essai hors invention, on n'introduit pas de sulfate de fer sous forme FeSO₄.7H₂O.On n'utilise pas non plus de sel de dipropionate trithiocarbonate (DPTTC).

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol) et 2,5 g d'acide acrylique (0,0347 mol).

On chauffe jusqu'à atteindre une température de 90°C.

On ajoute de manière simultanée et continue, en 2h de temps :
- 277,3 g d'acide acrylique (3,85 mol) et
- 35,3 g de H₂O₂ à 35 % dissous dans 9,4 g d'eau.

On cuit 1h30 à 90°C.

On neutralise avec de la soude 50 % jusqu'à obtenir un pH = 8.

### Essai 3 - Hors invention :

Selon cet essai hors invention, on n'introduit pas de sel de dipropionate trithiocarbonate (DPTTC).

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol), 0,28 g sulfate de fer sous forme FeSO₄.7H₂O (1,0 x 10⁻³ mol) et 10 g d'acide acrylique (0,139 mol).

On chauffe jusqu'à atteindre une température de 90°C.

On ajoute de manière simultanée et continue, en 2h de temps :
- 274,8 g d'acide acrylique (3,82 mol) et
- 35,3 g de H₂O₂ à 35 % dissous dans 9,4 g d'eau.

On cuit 1h30 à 90°C.

On neutralise avec de la soude 50 % jusqu'à obtenir un pH = 8.

### Essai 4 - Hors invention :

Selon cet essai hors invention, on n'introduit pas de carbonate de cuivre sous forme CuCO₃.Cu(OH)₂.

On charge dans le réacteur de synthèse en verre muni d'une agitation mécanique et d'un chauffage de type bain d'huile 245 g d'eau, 0,28 g de sulfate de fer sous forme FeSO₄.7H₂O (1,0 x 10⁻³ mol) et 2,5 g d'acide acrylique (0,0347 mol).

On chauffe jusqu'à atteindre une température de 90°C.

On ajoute de manière simultanée et continue, en 2h de temps :
- 277,3 g d'acide acrylique (3,85 mol),
- 35,3 g de H₂O₂ à 35 % dissous dans 9,4 g d'eau et
- 4,4 g de DPTTC 20,9 % dissous dans 33,5 g d'eau (soit 0,9 g de DPTTC 100 % ou 3 x 10⁻³ mol).

On cuit 1h30 à 90°C.

On neutralise avec de la soude 50 % jusqu'à obtenir un pH = 8.

### Essai 5 - Invention :

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol), 0,28 g de sulfate de fer sous forme FeSO₄.7H₂O (1,0 x 10⁻³ mol) et 15 g d'acide acrylique (0,208 mol).

On chauffe jusqu'à atteindre une température de 90°C.

On ajoute de manière simultanée et continue, en 2h de temps :
- 264,8 g d'acide acrylique (3,68 mol),
- 35,3 g de H₂O₂ à 35 % dissous dans 9,4 g d'eau et
- 5,4 g de DPTTC 20,9 % (soit 1,1 g de DPTTC 100 % ou 4 x 10⁻³ mol) dissous dans 34,4 g d'eau.

On cuit 1h30 à 90°C.

On neutralise avec de la soude 50 % jusqu'à obtenir un pH = 8.

### Essai 6 - Invention :

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol), 0,28 g de sulfate de fer sous forme FeSO₄.7H₂O (1,0 x 10⁻³ mol) et 2,5 g d'acide acrylique (0,0347 mol).

On chauffe jusqu'à atteindre une température de 90°C.

On ajoute de manière simultanée et continue, en 2h de temps :
- 277,3 g d'acide acrylique (3,85 mol),
- 35,3 g de H₂O₂ à 35 % dissous dans 9,4 g d'eau et
- 4,35 g de DPTTC 20,9 % (soit 0,9 g de DPTTC 100 % ou 3 x 10⁻³ mol) dissous dans 33,5 g d'eau.

On cuit 1h30 à 90°C.

On neutralise avec de la soude 50 % jusqu'à obtenir un pH = 8.

### Essai 7 - Invention :

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol) et 0,28 g de sulfate de fer sous forme FeSO₄.7H₂O (1,0 x 10⁻³ mol). Selon cet essai, aucun monomère anionique de type acide (méth)acrylique ou maléique n'est introduit dans le pied de cuve du réacteur.

On chauffe jusqu'à atteindre une température de 90°C.

On ajoute de manière simultanée et continue, en 2h de temps :
- 279,8 g d'acide acrylique (3,89 mol),
- 35,3 g de H₂O₂ à 35 % dissous dans 9,4 g d'eau et
- 4,35 g de DPTTC 20,9 % (soit 0,9 g de DPTTC 100 % ou 3 x 10⁻³ mol) dissous dans 33,5 g d'eau.

On cuit 1h30 à 90°C.

On neutralise avec de la soude 50 % jusqu'à obtenir un pH = 8.

### Essai 8 - Invention :

On charge dans le réacteur de synthèse en verre muni d'une agitation mécanique et d'un chauffage de type bain d'huile 245 g d'eau, 0,29 g de carbonate de cuivre sous forme CuCO₃.Cu(OH)₂ (1,2 x 10⁻³ mol) et 5,3 g d'acide acrylique (0,0736 mol).

On chauffe jusqu'à atteindre une température de 90°C.

On ajoute de manière simultanée et continue, en 2h de temps :
- 274,5 g d'acide acrylique (3,81 mol),
- 35,3 g de H₂O₂ à 35 % dissous dans 9,4 g d'eau et
- 4,4 g de DPTTC 20,9 % dissous dans 33,5 g d'eau (soit 0,9 g de DPTTC 100 % ou 3 x 10⁻³ mol).

On cuit 1h30 à 90°C.

On neutralise avec de la soude 50 % jusqu'à obtenir un pH = 8.

Tous les résultats ont été regroupés dans le Tableau 1.

**Tableau 1**

| **Essai n°** | **% molaire DPTTC / monomères** | **% molaire CuCO₃ / monomères** | **% molaire FeSO₄ / monomères** | **Mw (g/mol)** | **IP** |
|---|---|---|---|---|---|
| 1 - HINV | *na* | *na* | *0,026* | **36 000** | **6,4** |
| 2 - HINV | *na* | *0,03* | *na* | **12 060** | **3,2** |
| 3 - HINV | *na* | *0,03* | *0,026* | **6 860** | **2,7** |
| 4-HINV | *0,08* | *na* | *0,026* | **38 765** | **5,1** |
| 5-INV | *0,10* | *0,03* | *0,026* | 4 060 | 2,3 |
| 6-INV | *0,08* | *0,03* | *0,026* | 4 055 | 2,3 |
| 7-INV | *0,08* | *0,03* | *0,026* | 4 540 | 2,3 |
| 8-INV | *0,08* | *0,03* | *Na* | 5 885 | 2,6 |

| | | | | | |
|---|---|---|---|---|---|
| *na* : non applicable INV : INVention HINV : Hors INVention % molaire DPTTC / monomères : pourcentage molaire (mol/mol) entre ledit composé de formule (I) et ledit(lesdits) monomères anionique(s) à polymériser % molaire CuCO₃ / monomères : pourcentage molaire (mol/mol) entre le composé de type carbonate de cuivre ou un de ses dérivés a1) et ledit(lesdits) monomère(s) anionique(s) à polymériser ; en l'espèce le composé de type carbonate de cuivre est le CuCO₃.Cu(OH)₂ | | | | | |

Les conditions opératoires des essais 5 à 8 permettent d'obtenir un polymère de l'acide (méth)acrylique en solution aqueuse, ledit polymère présentant une masse moléculaire inférieure à 6 500 g/mol, telle que mesurée par CES, et un indice IP inférieur à 2,7.

## Revendications

1. Procédé de préparation d'un polymère de l'acide (méth)acrylique en solution aqueuse, ledit polymère présentant une masse moléculaire inférieure à 6 500 g/mol, telle que mesurée par Chromatographie d'Exclusion Stérique (CES), comprenant les étapes suivantes :
a) on introduit dans le réacteur de synthèse de l'eau, ainsi que:
a1) un composé de type carbonate de cuivre ou un de ses dérivés,
a2) éventuellement un sel de fer, par exemple du sulfate de fer et/ou éventuellement du carbonate de fer, et
a3) éventuellement un monomère anionique comprenant une fonction insaturée polymérisable et un groupement carboxylique, par exemple de l'acide (méth)acrylique et/ou de l'acide maléique,
b) on chauffe le réacteur à une température d'au moins 60°C et
c) on introduit dans le réacteur les composés suivants :
c1) le ou les monomère(s) (méth)acrylique(s) à polymériser,
c2) un système initiateur de polymérisation et
c3) un composé de formule (I) : 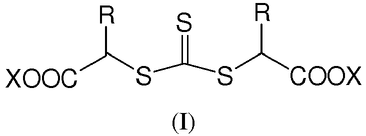 selon laquelle :
- X représente Na, K ou H et
- R représente une chaîne alkyle comportant de 1 à 5 atomes de carbone.

2. Procédé selon la revendication 1, selon lequel le pourcentage molaire (mol/mol) entre le composé de type carbonate de cuivre ou un de ses dérivés a1) et ledit(lesdits) monomère(s) anionique(s) à polymériser est compris entre 0,001 % et 3 %.

3. Procédé selon la revendication 1 ou 2, selon lequel le pourcentage molaire (mol/mol) entre le sel de fer et/ou le carbonate de fer a2) et ledit(lesdits) monomère(s) anionique(s) à polymériser est compris entre 0,001 % et 3 %.

4. Procédé selon la revendication 1 ou 2, selon lequel aucun sel de fer, par exemple sulfate de fer, n'est introduit dans le réacteur de synthèse au cours du procédé.

5. Procédé selon l'une quelconque des revendications précédentes, selon lequel le pourcentage massique (poids/poids) entre le monomère a3) et le(s) monomère(s) méthacrylique(s) à polymériser c1) est inférieur à 10 %.

6. Procédé selon l'une quelconque des revendications précédentes, selon lequel le pourcentage molaire (mol/mol) entre ledit composé de formule (I) et ledit(lesdits) monomère(s) anionique(s) à polymériser est compris entre 0,001 % et 1 %.

7. Procédé selon l'une quelconque des revendications précédentes, selon lequel ledit procédé ne comporte aucune étape d'élimination des sous-produits de réaction après l'étape c) de polymérisation.

8. Procédé selon l'une quelconque des revendications précédentes, selon lequel ledit procédé comporte une étape additionnelle de neutralisation, partielle ou totale, du polymère.

9. Procédé selon l'une quelconque des revendications précédentes, selon lequel ledit polymère de l'acide (méth)acrylique en solution aqueuse présente un indice IP inférieur à 2,7, tel que calculé selon IP = Mw/Mn, Mw et Mn étant mesurées par CES.

10. Utilisation d'au moins un composé de type carbonate de cuivre ou un de ses dérivés et d'un composé de formule (I) : 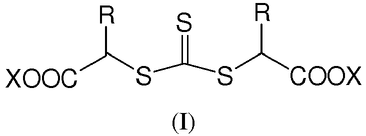 selon laquelle :
- X représente Na, K ou H et
- R représente une chaîne alkyle comportant de 1 à 5 atomes de carbone,
pour préparer un polymère de l'acide (méth)acrylique en solution, ledit polymère présentant une masse moléculaire inférieure à 6 500 g/mol, telle que mesurée par CES.

11. Utilisation selon la revendication 10 :
- d'au moins un composé de type carbonate de cuivre ou un de ses dérivés,
- d'un sel de fer, par exemple du sulfate de fer et/ou éventuellement du carbonate de fer, et
- d'un composé de formule (I) : 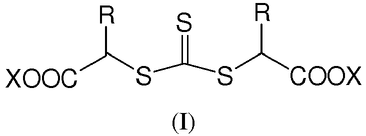 selon laquelle :
- X représente Na, K ou H et
- R représente une chaîne alkyle comportant de 1 à 5 atomes de carbone,
pour préparer un polymère de l'acide (méth)acrylique en solution, ledit polymère présentant une masse moléculaire inférieure à 6 500 g/mol, telle que mesurée par CES.

## Patentansprüche

1. Verfahren zur Herstellung eines (Meth)acrylsäurepolymers in wässriger Lösung, wobei das Polymer eine Molmasse gemäß Messung durch Größenausschlusschromatographie (SEC) von weniger als 6500 g/mol aufweist, bei dem man:
a) in den Synthesereaktor Wasser sowie
a1) eine Verbindung vom Kupfercarbonat-Typ oder eines ihrer Derivate,
a2) gegebenenfalls ein Eisensalz, beispielsweise Eisensulfat, und/oder gegebenenfalls Eisencarbonat und
a3) gegebenenfalls ein anionisches Monomer mit einer polymerisierbaren ungesättigten Funktion und einer Carboxylgruppe, beispielsweise (Meth)acrylsäure und/oder Maleinsäure,
einträgt,
b) den Reaktor auf eine Temperatur von mindestens 60°C erhitzt und
c) in den Reaktor die folgenden Verbindungen einträgt:
c1) das zu polymerisierende (Meth)acrylmonomer bzw. die zu polymerisierenden (Meth)acrylmonomere,
c2) ein Polymerisationsinitiatorsystem und
c3) eine Verbindung der Formel (I): 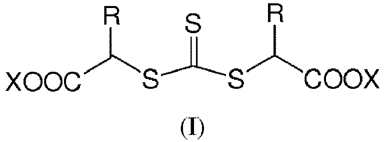 gemäß der:
- X für Na, K oder H steht und
- R für eine Alkylkette mit 1 bis 5 Kohlenstoffatomen steht.

2. Verfahren nach Anspruch 1, gemäß dem der Molprozentanteil (mol/mol) zwischen der Verbindung vom Kupfercarbonat-Typ oder einem ihrer Derivate a1) und dem zu polymerisierenden anionischen Monomer bzw. den zu polymerisierenden anionischen Monomeren zwischen 0,001 % und 3 % liegt.

3. Verfahren nach Anspruch 1 oder 2, gemäß dem der Molprozentanteil (mol/mol) zwischen dem Eisensalz und/oder Eisencarbonat a2) und dem zu polymerisierenden anionischen Monomer bzw. den zu polymerisierenden anionischen Monomeren zwischen 0,001 % und 3 % liegt.

4. Verfahren nach Anspruch 1 oder 2, gemäß dem im Lauf des Verfahrens kein Eisensalz, beispielsweise Eisensulfat, in den Reaktor eingetragen wird.

5. Verfahren nach einem der vorhergehenden Ansprüche, gemäß dem der Massenprozentanteil (Gewicht/Gewicht) zwischen dem Monomer a3) und dem zu polymerisierenden Methacrylmonomer bzw. den zu polymerisierenden Methacrylmonomeren c1) weniger als 10 % beträgt.

6. Verfahren nach einem der vorhergehenden Ansprüche, gemäß dem der Molprozentanteil (mol/mol) zwischen der Verbindung der Formel (I) und dem zu polymerisierenden anionischen Monomer bzw. den zu polymerisierenden anionischen Monomeren zwischen 0,001 % und 1 % liegt.

7. Verfahren nach einem der vorhergehenden Ansprüche, gemäß dem das Verfahren keinen Schritt der Entfernung von Reaktionsnebenprodukten nach dem Polymerisationsschritt c) umfasst.

8. Verfahren nach einem der vorhergehenden Ansprüche, gemäß dem das Verfahren einen zusätzlichen Schritt der teilweisen oder vollständigen Neutralisation des Polymers umfasst.

9. Verfahren nach einem der vorhergehenden Ansprüche, gemäß dem das (Meth)acrylsäurepolymer in wässriger Lösung einen PI-Index gemäß Berechnung nach PI = Mw/Mn, wobei Mw und Mn durch SEC gemessen werden, von weniger als 2,7 aufweist.

10. Verwendung mindestens einer Verbindung vom Kupfercarbonat-Typ oder eines ihrer Derivate und einer Verbindung der Formel (I): 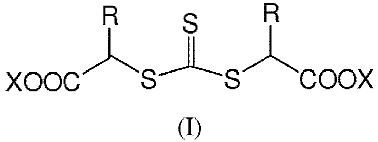 gemäß der:
- X für Na, K oder H steht und
- R für eine Alkylkette mit 1 bis 5 Kohlenstoffatomen steht,
zur Herstellung eines (Meth)acrylsäurepolymers in Lösung, wobei das Polymer eine Molmasse gemäß Messung durch SEC von weniger als 6500 g/mol aufweist.

11. Verwendung nach Anspruch 10:
- mindestens einer Verbindung vom Kupfercarbonat-Typ oder eines ihrer Derivate,
- eines Eisensalzes, beispielsweise Eisensulfat, und/oder gegebenenfalls Eisen carbonat und
- einer Verbindung der Formel (I): 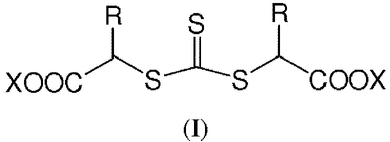 gemäß der:
- X für Na, K oder H steht und
- R für eine Alkylkette mit 1 bis 5 Kohlenstoffatomen steht,
zur Herstellung eines (Meth)acrylsäurepolymers in Lösung, wobei das Polymer eine Molmasse gemäß Messung durch SEC von weniger als 6500 g/mol aufweist.

## Claims

1. A method for the preparation of a polymer of (meth)acrylic acid in aqueous solution, said polymer having a molecular mass of less than 6,500 g/mol, as measured by Size Exclusion Chromatography (SEC), comprising the following steps:
a) water is introduced into the synthesis reactor, and also:
a1) a compound of copper carbonate type or one of its derivatives,
a2) optionally an iron salt, for example iron sulfate and/or optionally iron carbonate, and
a3) optionally an anionic monomer comprising a polymerisable unsaturated function and a carboxyl group, for example (meth)acrylic acid and/or maleic acid,
b) the reactor is heated to a temperature of at least 60°C and
c) the following compounds are introduced into the reactor:
c1) the (meth)acrylic monomer(s) to be polymerised,
c2) a polymerisation initiating system and
c3) a compound of formula (I): 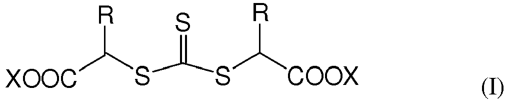 according to which:
- X represents Na, K or H and
- R represents an alkyl chain comprising from 1 to 5 carbon atoms.

2. Method according to claim 1, according to which the molar percentage (mol/mol) between the compound of copper carbonate type or one of its derivatives a1) and said anionic monomer(s) to be polymerised is between 0.001% and 3%.

3. Method according to claim 1 or 2, according to which the molar percentage (mol/mol) between the iron salt and/or the iron carbonate a2) and said anionic monomer(s) to be polymerised is between 0.001% and 3%.

4. Method according to claim 1 or 2, according to which no iron salt, for example iron sulfate, is introduced into the synthesis reactor during the method.

5. Method according to any one of the preceding claims, according to which the mass percentage (weight/weight) between the monomer a3) and the methacrylic monomer(s) to be polymerised c1) is less than 10%.

6. Method according to any one of the preceding claims, according to which the molar percentage (mol/mol) between said compound of formula (I) and said anionic monomer(s) to be polymerised is between 0.001% and 1%.

7. Method according to any one of the preceding claims, according to which said method does not comprise any step of removal of the reaction byproducts after the polymerisation step c).

8. Method according to any one of the preceding claims, according to which said method comprises an additional step of partial or complete neutralization of the polymer.

9. Method according to any one of the preceding claims, according to which said polymer of (meth)acrylic acid in aqueous solution has a PI index of less than 2.7, as calculated according to PI = Mw/Mn, Mw and Mn being measured by SEC.

10. A use of at least one compound of copper carbonate type or one of its derivatives and of a compound of formula (I): 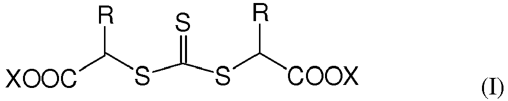 according to which:
- X represents Na, K or H and
- R represents an alkyl chain comprising from 1 to 5 carbon atoms,
for preparing a polymer of (meth)acrylic acid in solution, said polymer having a molecular mass of less than 6,500 g/mol, as measured by SEC.

11. A use according to claim 10:
- of at least one compound of copper carbonate type or one of its derivatives,
- of an iron salt, for example iron sulfate and/or optionally iron carbonate, and
- of a compound of formula (I): 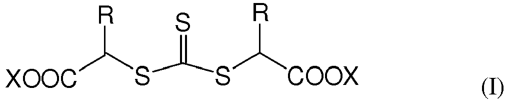 according to which:
- X represents Na, K or H and
- R represents an alkyl chain comprising from 1 to 5 carbon atoms,
for preparing a polymer of (meth)acrylic acid in solution, said polymer having a molecular mass of less than 6,500 g/mol, as measured by SEC.
